# EUROPEAN PATENT APPLICATION

(11) **EP 3 351 648 A1**
(43) Date of publication of application: **25.07.2018**
(21) Application number: 16846385.9
(22) Date of filing: 09.09.2016
(51) Int. Cl.: C22C 21/10, C22F 1/053, F28F 21/08, B23K 1/00

(54) **ALUMINUM ALLOY FIN MATERIAL FOR HEAT EXCHANGER, METHOD FOR MANUFACTURING SAME, HEAT EXCHANGER USING SAID ALUMINUM ALLOY FIN MATERIAL AND METHOD FOR MANUFACTURING SAME**

(30) Priority: 19.09.2015 JP 2015186109; 19.09.2015 JP 2015186110; 01.09.2016 JP 2016171327
(71) Applicant: UACJ Corporation, Tokyo 100-0004 (JP)
(72) Inventor: ANDO Makoto, Tokyo 100-0004 (JP); FUKUMOTO Atsushi, Tokyo 100-0004 (JP)
(74) Representative: v. Bezold & Partner Patentanwälte - PartG mbB
(86) International application number: PCT/JP2016/076579
(87) International publication number: WO 2017/047514

(57) **Abstract**

There are provided: an aluminum alloy fin material for a heat exchanger, the aluminum alloy fin material including an aluminum alloy including 0.70 to 1.50 mass% Si, 0.05 to 2.00 mass% Fe, 1.0 to 2.0 mass% Mn, 0.5 to 4.0 mass% Zn, with a balance consisting of Al and inevitable impurities, in which before brazing heating, the amount of solid solution Si is 0.60 mass% or less, and the amount of solid solution Mn is 0.60 mass% or less, and in which a recrystallization temperature in a temperature rise process during the brazing heating is 450°C or less; a method of producing the aluminum alloy fin material; a heat exchanger using the aluminum alloy fin material; and a method of producing the heat exchanger.

## Description

### Technical Field

The present disclosure relates to: an aluminum alloy fin material for a heat exchanger, specifically an aluminum alloy fin material for a heat exchanger in which fin and a component material of a working fluid passage are joined to each other by brazing, such as a radiator, a heater core, an oil cooler, an intercooler, a condenser, or an evaporator in a car air conditioner, particularly an aluminum alloy fin material for a heat exchanger having excellent resistance to melting of a fin during brazing and excellent high-temperature durability after the brazing; a method of producing the aluminum alloy fin material; a heat exchanger to which the aluminum alloy fin material is assembled; and a method of producing the heat exchanger.

### Background Art

Aluminum alloys are lightweight and have high thermal conductivity, and the high corrosion resistance of such aluminum alloys can be achieved by appropriate treatment. Therefore, such aluminum alloys have been used in heat exchangers for use in automobiles and the like, such as radiators, condensers, evaporators, heaters, intercoolers, and oil coolers. A two-layered tube material in which an Al-Mn-based alloy such as a 3003 alloy is used as a core material and one surface of the core material is cladded with a brazing filler material with an Al-Si-based alloy or a sacrificial anode material with an Al-Zn-based alloy, a three-layered tube material in which the other surface is further cladded with a brazing filler material with an Al-Si-based alloy, or the like is used as a tube material for an automotive heat exchanger. Heat exchangers are typically joined by combining such tube materials and corrugated aluminum alloy fin materials and brazing the tube materials and the corrugated aluminum alloy fin materials at a high temperature of around 600°C.

In such heat exchangers, pure aluminum-based alloys such as JIS 1050 alloys excellent in thermal conductivity and Al-Mn-based alloys such as JIS 3003 alloys excellent in strength and buckling resistance have been commonly used as aluminum alloy fin materials.

In recent years, the reduced weights, reduced sizes, and enhanced performance of heat exchangers have been increasingly demanded. As a result, it has been particularly demanded that aluminum alloy fin materials to be joined by brazing have thin thicknesses, favorable brazability, and moreover excellent characteristics such as strength, thermal conductivity, and corrosion resistance after brazing heating. However, such thinner thicknesses have particularly precluded the solution of such problems as described below.

There is a problem in that a fin is corroded by a brazing-filler generated from an Al-Si-based brazing filler material during brazing, whereby the fin is melted at the grain boundary. Because Zn and Si are segregated at the grain boundary, the concentrations of Zn and Si at the grain boundary are higher than those in a matrix, and the grain boundary is in a state in which a melting point is lower. Moreover, Si diffuses from the melted brazing-filler into the fin during the brazing. In such a case, the diffusion rate of Si at the grain boundary is much higher than the diffusion rate of Si in the matrix, and therefore, a large amount of Si diffuses particularly into a grain boundary. Because Si diffuses into the overall sheet thickness of the fin, the influence of the diffusion is not large when the sheet thickness of the fin is large. However, when the sheet thickness is small, the amount of Si solid solution in the grain boundary of a fin material greatly increases, the melting point of the grain boundary decreases, and the fin is melted. Therefore, it is necessary to, in advance, reduce the amount of Si solid solution in the fin material before the brazing.

A technology for reducing the amount of solid solution Si in a fin material is described in Patent Literature 1. In the technology, the intergranular corrosion of a fin is assumed to be able to be suppressed by setting the amount of Si solid solution at 0.7% or less in the center of a fin thickness after brazing heating. However, the technology is not assumed to be intended to solve the problem of melting of a fin in a grain boundary. Therefore, the problem in that resistance to melting of a fin is influenced not only by the amount of solid solution Si before brazing but also by segregation at a grain boundary is not recognized at all, and a method of solving the problem is not suggested at all.

There is another problem in that durability is poor at high temperature. For example, in the case of use as a fin for a radiator, cooling water flowing into a tube has a high temperature of around 85 to 120°C, the tube is repeatedly bulge due to internal pressure, and high-temperature fatigue damage to the fin is caused. Therefore, rupture is caused by the high-temperature fatigue damage when the sheet thickness of the fin is small.

A technology for improving the durability of a fin is described in Patent Literature 2. In the technology, control of an Al-(Mn, Fe)-Si-based compound to an appropriate number density is assumed to allow the strength of a fin material after brazing heating to be improved, thereby improving strength as a heat exchanger, that is, durability. In the technology, however, the heat exchanger having a high temperature is not mentioned at all, and therefore, a method of solving the problem of a rupture of the fin due to high-temperature fatigue damage is not suggested at all.

### Citation List

### Patent Literature

Patent Literature 1: Unexamined Japanese Patent Application Kokai Publication No. 2004-084060
Patent Literature 2: Unexamined Japanese Patent Application Kokai Publication No. 2012-126950

### Summary of Invention

### Technical Problem

As described above, it has been difficult in conventional technologies to provide an aluminum alloy fin material that suppresses melting of a fin in a grain boundary during brazing in the case of using an aluminum alloy fin material thin in thickness in a heat exchanger and that moreover has excellent high-temperature durability after the brazing.

The present disclosure was accomplished in order to solve the above-described problems, with an objective of providing: an aluminum alloy fin material for a heat exchanger, having excellent resistance to melting of a fin during brazing and having excellent high-temperature durability after the brazing; a method of producing the aluminum alloy fin material; a heat exchanger for use in an automobile and/or the like, using the aluminum alloy fin material; and a method of producing the heat exchanger.

### Solution to Problem

In claim 1, the present disclosure provides an aluminum alloy fin material for a heat exchanger, the aluminum alloy fin material including an aluminum alloy including 0.70 to 1.50 mass% Si, 0.05 to 2.00 mass% Fe, 1.0 to 2.0 mass% Mn, 0.5 to 4.0 mass% Zn, with a balance consisting of Al and inevitable impurities, wherein before brazing heating, the amount of solid solution Si is 0.60 mass% or less, and the amount of solid solution Mn is 0.60 mass% or less, and wherein a recrystallization temperature in a temperature rise process during the brazing heating is 450°C or less.

In claim 2, the present disclosure provides the aluminum alloy fin material for a heat exchanger according to claim 1, wherein in the aluminum alloy after brazing heating, the amount of solid solution Mn is 0.60 mass% or less, and each of values of S1/S2 and Z1/Z2 is 1.20 or less when the concentrations of Si and Zn in the vicinity of a grain boundary are assumed to be S1 mass% and Z1 mass%, respectively, and the concentrations of Si and Zn in a matrix are assumed to be S2 mass% and Z2 mass%, respectively.

In claim 3, the present disclosure provides the aluminum alloy fin material for a heat exchanger according to claim 1 or 2, wherein the aluminum alloy further includes one or more selected from 0.05 to 0.30 mass% Cu, 0.05 to 0.30 mass% Ti, 0.05 to 0.30 mass% Zr, 0.05 to 0.30 mass% Cr, and 0.05 to 0.30 mass% V.

In claim 4, a method of producing an aluminum alloy fin material for a heat exchanger of the present disclosure, according to Embodiment 1, is a method of producing the aluminum alloy fin material for a heat exchanger according to any one of claims 1 to 3, the method including a step of casting the aluminum alloy, a hot-rolling step of hot-rolling a cast ingot, a cold-rolling step of cold-rolling a hot-rolled sheet, and one or more annealing steps of annealing a cold-rolled sheet in or after the cold-rolling step, or in and after the cold-rolling step, wherein the hot-rolling step includes a heating stage, a retention stage, and a hot-rolling stage, wherein in the heating stage, a heating rate from attainment of 400°C to attainment of a retention temperature in the retention stage is 60°C/h or less, wherein in the retention stage, the retention temperature is 450 to 560°C, and a retention time is 0.5 hour or more, wherein in the hot-rolling stage, a time for which the hot-rolled sheet has a temperature of 400°C or more is 5 minutes or more, and wherein in the cold-rolling step, the cold-rolled sheet has a temperature of 120°C or less.

In claim 5, a method of producing an aluminum alloy fin material for a heat exchanger of the present disclosure, according to Embodiment 2, is a method of producing the aluminum alloy fin material for a heat exchanger according to any one of claims 1 to 3, the method including a step of casting the aluminum alloy, a homogenization treatment step of homogenization-treating a cast ingot, a hot-rolling step of hot-rolling a homogenization-treated ingot, a cold-rolling step of cold-rolling a hot-rolled sheet, and one or more annealing steps of annealing a cold-rolled sheet in or after the cold-rolling step, or in and after the cold-rolling step, wherein the homogenization treatment step includes a heating stage, a retention stage, and a cooling stage, wherein in the heating stage, a heating rate from attainment of 400°C to attainment of a retention temperature in the retention stage is 60°C/h or less, wherein in the retention stage, the retention temperature is 450 to 560°C, and a retention time is 1.0 hour or more, wherein in the cooling stage, a cooling rate before the ingot attains a temperature of 400°C is 60°C/h or less, and wherein in the cold-rolling step, the cold-rolled sheet has a temperature of 120°C or less.

In claim 6, the present disclosure provides a heat exchanger to which the aluminum alloy fin material according to any one of claims 1 to 3 is assembled by brazing.

In claim 7, the present disclosure provides a method of producing the heat exchanger according to claim 6, the method including subjecting a combination of the aluminum alloy fin material according to any one of claims 1 to 3 with another member to brazing heating at an attainment temperature of 590 to 615°C for 2 to 6 minutes, wherein a recrystallization temperature in a temperature rise process during brazing is set at 450°C or less, and a heating rate in a temperature range of 300 to 580°C is set at 60 to 160°C/min.

### Advantageous Effects of Invention

According to the present disclosure, there are provided: an aluminum alloy fin material for a heat exchanger, having excellent resistance to melting of a fin during brazing and exhibiting excellent high-temperature durability after the brazing; and a heat exchanger for use in an automobile and/or the like, using the aluminum alloy fin material. The aluminum alloy fin material according to the present disclosure is preferably used as a fin material for a heat exchanger for use in an automobile and/or the like because of having not only excellent formability but also excellent corrosion resistance and excellent thermal conductivity after brazing heating.

### Description of Embodiments

Preferred embodiments of an aluminum alloy fin material according to the present disclosure, a method of producing the aluminum alloy fin material, and a heat exchanger using the aluminum alloy fin material will be described in detail.

### 1. Constitution of Aluminum Alloy Fin Material, and Method of Supplying Brazing-Filler

The aluminum alloy fin material for a heat exchanger according to the present disclosure (hereinafter simply referred to as "aluminum alloy fin material") is assumed to be a bare material with a one-layer constitution, which is not cladded with a skin material such as a brazing filler material. A brazing-filler needed for brazing is supplied by, for example, cladding of a low-melting-point Al-Si alloy on a flow passage formation component which becomes an opposite material for joining.

### 2. Alloy compositions

In the aluminum alloy fin material according to the present disclosure, an aluminum alloy including 0.70 to 1.50 mass% (hereinafter simply referred to as "%") Si, 0.05 to 2.00% Fe, 1.0 to 2.0% Mn, and 0.5 to 4.0% Zn as essential elements, with a balance consisting of Al and inevitable impurities. The aluminum alloy may also further include, as selective additional elements, one or more selected from 0.05 to 0.30% Cu, 0.05 to 0.30% Ti, 0.05 to 0.30% Zr, 0.05 to 0.30% Cr, and 0.05 to 0.30% V. In addition to the essential elements and the selective additional elements, 0.15% in total of Ni, Co, and the like, of which each is 0.05% or less, may be further contained as inevitable impurities. Each composition will be described in detail below.

### Si

Si forms, together with Fe and Mn, Al-Fe-Si-based, Al-Mn-Si-based, and Al-Fe-Mn-Si-based intermetallic compounds, improves strength due to dispersion strengthening, or forms a solid solution in an aluminum matrix, thereby improving strength due to solid solution strengthening. The content of Si is 0.70 to 1.50%. A Si content of less than 0.70% causes the above-described effects to be insufficient, while a Si content of more than 1.50% results in a decrease in a melting point, whereby melting is more likely to occur. The preferred content of Si is 0.75 to 1.20%.

### Fe

Fe forms, together with Si and Mn, an Al-Fe-Mn-Si-based intermetallic compound, and improves strength due to dispersion strengthening. The content of Fe is 0.05 to 2.00%. An Fe content of less than 0.05% requires use of a high-purity aluminum base metal, thereby resulting in an increased cost. In contrast, an Fe content of more than 2.00% is prone to result in formation of a giant intermetallic compound in casting, thereby deteriorating plastic workability. The preferred content of Fe is 0.10 to 1.50%.

### Mn

Mn forms, together with Si, an Al-Mn-Si-based intermetallic compound, forms, together with Si and Fe, an Al-Mn-Fe-Si-based intermetallic compound, improves strength due to dispersion strengthening, or forms a solid solution in an aluminum matrix, thereby improving strength due to solid solution strengthening. The content of Mn is 1.0 to 2.0%. A Mn content of less than 1.0% causes the above-described effects to be insufficient, while a Mn content of more than 2.0% is prone to result in formation of a giant intermetallic compound in casting, thereby deteriorating plastic workability. The preferred content of Mn is 1.1 to 1.8%.

### Zn

Zn can result in a lower pitting potential, and can result in formation of a potential difference from a brazed opposite material such as a tube, thereby improving the corrosion resistance of the opposite material due to a sacrificial protection effect. The content of Zn is 0.5 to 4.0%. A Zn content of less than 0.5% causes the effect of improving corrosion resistance due to the sacrificial protection effect to be insufficiently obtained. In contrast, a Zn content of more than 4.0% results in the increased corrosion rate of a fin, causes the fin to disappear early, and results in insufficient corrosion resistance. The preferred content of Zn is 1.0 to 3.5%.

### Cu

Cu may be contained because of improving strength due to solid solution strengthening. The content of Cu is 0.05 to 0.30%. A Cu content of less than 0.05% causes the above-described effect to be insufficient, while a Cu content of more than 0.30% results in a higher pitting potential and results in an insufficient sacrificial protection effect. The preferred content of Cu is 0.10 to 0.30%.

### Ti

Ti may be contained because of improving strength due to solid solution strengthening. The content of Ti is 0.05 to 0.30%. A Ti content of less than 0.05% causes the above-described effect to be insufficient. A Ti content of more than 0.30% is prone to result in formation of a giant intermetallic compound, thereby deteriorating plastic workability. The preferred content of Ti is 0.10 to 0.20%.

### Zr

Zr may be contained because of improving strength due to solid solution strengthening and having the effect of causing precipitation of an Al-Zr-based intermetallic compound, thereby coarsening crystal grains after brazing heating. The content of Zr is 0.05 to 0.30%. A Zr content of less than 0.05% prevents the above-described effects from being obtained. A Zr content of more than 0.30% is prone to result in formation of a giant intermetallic compound, thereby deteriorating plastic workability. The preferred content of Zr is 0.10 to 0.20%.

### Cr

Cr may be contained because of improving strength due to solid solution strengthening and having the effect of causing precipitation of an Al- Cr-based intermetallic compound, thereby coarsening crystal grains after brazing heating. The content of Cr is 0.05 to 0.30%. A Cr content of less than 0.05% prevents the above-described effects from being obtained. A Cr content of more than 0.30% is prone to result in formation of a giant intermetallic compound, thereby deteriorating plastic workability. The preferred content of Cr is 0.10 to 0.20%.

### V

V may be contained because of not only improving strength due to solid solution strengthening but also improving corrosion resistance. The content of V is 0.05 to 0.30%. A V content of less than 0.05% prevents the above-described effects from being obtained. A V content of more than 0.30% is prone to result in formation of a giant intermetallic compound, thereby deteriorating plastic workability. The preferred content of V is 0.10 to 0.20%.

At least one of such Cu, Ti, Zr, Cr, and V may be optionally added.

### 3. Amount of Solid Solution Before and After Brazing

In the aluminum alloy fin material according to the present disclosure, the amounts of solid solution Si and solid solution Mn before brazing heating are limited to 0.60% or less and 0.60% or less, respectively. Such limitations are intended to prevent a fin from being melted during brazing heating and to improve high-temperature durability after the brazing heating. The reasons of the limitations will be described below.

As already mentioned, a large amount of Si diffuses from a melted brazing-filler along the grain boundary of a fin material during brazing, thereby resulting in a decrease in a melting point at the grain boundary of the fin material. Because it is impossible to prevent such diffusion of Si during brazing, it is important to, in advance, reduce the amount of solid solution Si in the fin material before the brazing. When the amount of solid solution Si before the brazing is 0.60% or less, the total concentration of Si at the grain boundary can be reduced to not more than a predetermined level even if a large amount of Si diffuses from the melted brazing-filler along the grain boundary of the fin material, and therefore, a decrease in melting point at the grain boundary during the brazing can be suppressed to prevent the grain boundary from being melted. When the amount of solid solution Si before the brazing is more than 0.60%, the diffusion of a large quantity of Si from the melted brazing-filler along the grain boundary of the fin material allows the total concentration of Si at the grain boundary to be more than the predetermined level, and therefore, the melting point of the grain boundary during the brazing decreases, thereby resulting in the melting of the grain boundary. Therefore, the amount of solid solution Si before the brazing is regulated to 0.60% or less, and preferably to 0.55% or less. The lower limit value of the amount of solid solution Si before the brazing is not limited from the viewpoint of melting during brazing, but it is difficult to set the lower limit value at 0.05% or less within the range of a Si content set in the present disclosure.

As already mentioned, for example, in the case of use as a fin for a radiator, cooling water flowing into a tube has a high temperature of around 85 to 120°C, the tube is repeatedly bulge due to internal pressure, and high-temperature fatigue damage to the fin is caused. However, a phenomenon in which part of the caused fatigue damage is recovered at high temperature is seen. As a result of repeatedly conducting intensive research, the present inventors revealed that solid solution Mn is a factor that prevents such a recovery. On the basis of the fact, the present inventors found that high-temperature durability can be improved by reducing the amount of solid solution Mn after brazing heating to a low level.

Specifically, when the amount of solid solution Mn after brazing heating is 0.60% or less, the fatigue damage is sufficiently recovered, and excellent high-temperature durability can be obtained. When the amount of solid solution Mn after brazing is more than 0.60%, the recovery of the fatigue damage is prevented, and high-temperature durability becomes insufficient. Therefore, the amount of solid solution Mn after brazing is regulated to 0.60% or less, and preferably to 0.55% or less.

Because the solid solutions of Al-Mn-Si-based, Al-Fe-Mn-Si-based, and Al-Mn-based intermetallic compounds are generated in brazing, the amount of solid solution Mn after brazing is more than that before brazing. Therefore, it is impossible to set the amount of solid solution Mn in a state after brazing at 0.60% or less unless at least a condition that the amount of solid solution Mn in a state before brazing is 0.60% or less is satisfied. Therefore, the amount of solid solution Mn before brazing is also regulated to 0.60% or less. As a result, excellent high-temperature durability is exhibited. In contrast, when the amount of solid solution Mn before brazing is more than 0.60%, it is impossible to reduce the amount of solid solution Mn after brazing to 0.60% or less, and it is impossible to obtain excellent high-temperature durability. On the basis of the above, the amounts of solid solution Mn before and after brazing are regulated to 0.60% or less, and preferably to 0.55% or less. The lower limit values of the amounts of solid solution Mn before and after brazing are not limited from the viewpoint of high-temperature durability, but it is difficult to set the lower limit values at 0.05% or less within the range of a Mn content set in the present disclosure.

### 4. Grain Boundary Segregation after Brazing

In the aluminum alloy fin material according to the present disclosure, each of the values of S1/S2 and Z1/Z2 is set at 1.20 or less when the concentrations of Si and Zn in the vicinity of a grain boundary are assumed to be S1% and Z1%, respectively, and the concentrations of Si and Zn in a matrix are assumed to be S2% and Z2 %, respectively, during brazing. Such limitations are intended to prevent a fin from being melted during brazing. The reasons of the limitations will be described below.

Recrystallization occurs in an aluminum alloy fin material during brazing. As already mentioned, because Zn and Si are segregated at the grain boundary, the concentrations of Zn and Si in the vicinity of the grain boundary are higher than those in a matrix, and the grain boundary is in a state in which a melting point is lower. Therefore, suppression of grain boundary segregation during brazing is required for suppressing melting of a fin.

As a result of repeatedly conducting intensive research, the present inventors found that melting of a grain boundary can be suppressed in a case in which each of a ratio between the amounts of solid solution Zn and a ratio between the amounts of solid solution Si in the vicinity of a grain boundary and in a matrix after brazing, that is, each of the values of S1/S2 and Z1/Z2 is 1.20 or less when the concentrations of Si and Zn in the vicinity of the grain boundary are assumed to be S1% and Z1%, respectively, and the concentrations of Si and Zn in the matrix are assumed to be S2% and Z2%, respectively. When each of the values of S1/S2 and Z1/Z2 is 1.20 or less, grain boundary segregation during brazing is sufficiently suppressed, and a grain boundary is not melted. When one or both of the values of S1/S2 and Z1/Z2 are more than 1.20, suppression of grain boundary segregation during brazing is insufficient, and a grain boundary is melted. Both the preferred values of S1/S2 and Z1/Z2 are 1.10 or less. The lower limit values of S1/S2 and Z1/Z2 are not limited from the viewpoint of melting of a fin, but when the amount of solid solution element in the vicinity of a grain boundary is much smaller than that in a matrix, the element in the matrix diffuses into the grain boundary, and therefore, it is difficult to set each of S1/S2 and Z1/Z2 at 0.50 or less.

In a cooling process in brazing, precipitation preferentially occurs in the vicinity of a grain boundary, and the amount of solid solution in the vicinity of the grain boundary is reduced. Therefore, even if grain boundary segregation occurs during brazing, the amount of solid solution in the grain boundary may be less than the amount of solid solution in a matrix after the brazing, and the values of S1/S2 and Z1/Z2 may be less than 1.00. Herein, the amount of solid solution in the vicinity of the grain boundary is assumed to refer to the average value of the amounts of solid solution within a range of 0.05 µm on both sides of the grain boundary.

### 5. Recrystallization Temperature during Brazing

In the aluminum alloy fin material according to the present disclosure, a recrystallization temperature in a temperature rise process during brazing is set at 450°C or less. Such limitations are intended to prevent a fin from being melted during brazing. The reasons of the limitations will be described below.

As already mentioned, suppression of grain boundary segregation in recrystallization during brazing is required for preventing a grain boundary from being melted during brazing. However, since Si and Zn in certain amounts form solid solution in a matrix, it is difficult to completely prevent grain boundary segregation occurring in recrystallization. Even if grain boundary segregation occurs in such a case, a grain boundary is not melted when a time between recrystallization and the melting of a brazing filler material during brazing is sufficient, and an element segregated in a grain boundary during the time diffuses into a matrix, thereby eliminating the grain boundary segregation. As a result of repeatedly conducting intensive research with attention to the above, the present inventors found that melting of a grain boundary can be suppressed by eliminating grain boundary segregation before melting of a brazing-filler by completing recrystallization early in a temperature rise process during brazing.

Specifically, the present inventors found that a recrystallization temperature of 450°C or less in a temperature rise process during brazing results in elimination of grain boundary segregation before melting of a brazing-filler, thereby preventing a grain boundary from being melted. In other words, when a recrystallization temperature in a temperature rise process during brazing is 450°C or less, both the values of S1/S2 and Z1/Z2 described above can be controlled to 1.20 or less, whereby grain boundary segregation during the brazing is sufficiently suppressed, and a grain boundary is not melted. In contrast, when a recrystallization temperature in a temperature rise process during brazing is more than 450°C, grain boundary segregation is not eliminated before melting of a brazing-filler, and a grain boundary is melted. In other words, when a recrystallization temperature in a temperature rise process during brazing is more than 450°C, one or both of the values of S1/S2 and Z1/Z2 described above are more than 1.20, thereby resulting in insufficient suppression of grain boundary segregation during the brazing and in melting of a grain boundary. A recrystallization temperature in a temperature rise process during brazing is preferably 400°C or less. The lower limit of a recrystallization temperature in a temperature rise process during brazing is not limited from the viewpoint of resistance to melting of a fin, but it is difficult to set the lower limit at 250°C or less because thermal energy for causing recrystallization is insufficient in an excessively low temperature range in the aluminum alloy fin material of the present disclosure.

Brazing heating conditions (brazing heating relevant conditions) are not particularly limited, but brazing heating is performed at a heating rate of typically 60 to 160°C/min, preferably 80 to 140°C/min, in a temperature range of 300 to 580°C, for 2 to 10 minutes at an attainment temperature of 585 to 620°C, preferably for 2 to 6 minutes at an attainment temperature of 590 to 615°C. When a heating rate in a temperature range of 300 to 580°C is less than 60°C/min, the heating rate is too slow, and production efficiency is considerably deteriorated. When the heating rate is more than 160°C/min, a temperature distribution during brazing may become nonuniform. An attainment temperature of less than 585°C may result in insufficient melting of a brazing-filler and may prevent favorable brazing, while an attainment temperature of more than 620°C may cause a material to be melted. A brazed product is typically cooled at a cooling rate of 20 to 500°C/min.

### 6. Methods of Producing Aluminum Alloy Fin Material

The aluminum alloy fin material according to the present disclosure can be produced by production methods according to two different embodiments. The production method in Embodiment 1 is characterized by including a hot-rolling step and a cold-rolling step, differs in the hot-rolling step from the production method in Embodiment 2 described later, further includes a homogenization treatment step as an optional step, and also differs in the conditions of the homogenization treatment step from the production method in Embodiment 2. In contrast, the production method in Embodiment 2 is characterized by including a homogenization treatment step and a cold-rolling step, differs in including the homogenization treatment step as an essential step from the production method in Embodiment 1, and also differs in the conditions of the homogenization treatment step from the production method in Embodiment 1. In addition, the hot-rolling step in the production method in Embodiment 2 differs from that in Embodiment 1.

### 6-1. Production Method in Embodiment 1

The method of producing the aluminum alloy fin material according to the present disclosure in Embodiment 1 will now be described.

### 6-1-1. Each Production Step

The method of producing the aluminum alloy fin material according to the present disclosure in Embodiment 1 includes a step of casting an aluminum alloy, a hot-rolling step of hot-rolling a cast ingot, a cold-rolling step of cold-rolling a hot-rolled sheet, and one or more annealing steps of annealing a cold-rolled sheet in or after the cold-rolling step, or in and after the cold-rolling step.

In the aluminum alloy fin material of the present disclosure, excellent resistance to melting of a fin and high-temperature durability are achieved by controlling the amounts of solid solution Si and solid solution Mn, and a recrystallization temperature during brazing. As a result of intensive research, the present inventors found that in a production step, the hot-rolling step most greatly influences the amounts of solid solution Si and solid solution Mn, and the cold-rolling step most greatly influences a recrystallization temperature during brazing. Methods of controlling the hot-rolling step and the cold-rolling step will be described below.

### 6-1-2. Hot-Rolling Step

The method of producing the aluminum alloy fin material according to the present disclosure in Embodiment 1 is characterized primarily by the hot-rolling step of hot-rolling a cast aluminum alloy ingot. The hot-rolling step includes a heating stage of heating an ingot, a retention stage subsequent to the heating stage, and a hot-rolling stage of rolling the heated and retained ingot. In the heating stage, a heating rate from attainment of 400°C to attainment of a retention temperature in the retention stage is set at 60°C/h or less. In the retention stage, the retention temperature is set at 450 to 560°C, and a retention time is set at 0.5 hour or more. Further, in the hot-rolling stage, a time for which the hot-rolled sheet has a temperature of 400°C or more is set at 5 minutes or more. The setting of the conditions of the step of hot-rolling an aluminum alloy in such a manner enables the aluminum alloy fin material according to the present disclosure to achieve the amount of solid solution Si before brazing, set in the present disclosure, and the amounts of solid solution Mn before and after the brazing, set in the present disclosure (hereinafter referred to as "amounts of solid solution Si and solid solution Mn set in the present disclosure") and to exhibit excellent resistance to melting of a fin and excellent high-temperature durability during the brazing. The reasons thereof will be described below.

In the step of casting an aluminum alloy, large amounts of Si and Mn form solid solution in the matrix of the ingot. Such large amounts of Si and Mn forming solid solution in the matrix in such a manner generate the nuclei of Al-Mn-based and Al-Mn-Si-based intermetallic compounds in the heating stage prior to the rolling stage in the hot-rolling step, and in the rolling stage, a large amount of the intermetallic compounds is precipitated based on the nuclei. As a result, the hot-rolling step including the heating stage almost determines the amounts of solid solution Si and solid solution Mn, set in the present disclosure, in the aluminum alloy fin material.

Therefore, in order to reduce the amounts of solid solution Si and solid solution Mn, maximum amounts of the nuclei of Al-Mn-based and Al-Mn-Si-based intermetallic compounds may be generated in the heating stage, and maximum amounts of the intermetallic compounds may be precipitated in the rolling stage. In particular, because the amounts of the generated nuclei after attainment of 400°C are large in the heating stage, subsequent temperature control is important. Al-Mn-based and Al-Mn-Si-based intermetallic compounds can be sufficiently precipitated, and the amounts of solid solution Si and solid solution Mn, set in the present disclosure, can be obtained, by setting, at 60°C/h or less, a heating rate from attainment of 400°C to attainment of a retention temperature in the heating stage, setting, at 0.5 hour or more, a retention time at a retention temperature of 450 to 560°C in the retention stage, and setting, at 5 minutes or more, a time for which the hot-rolled sheet has a temperature of 400°C or more in the hot-rolling stage.

When the heating rate from the attainment of 400°C to the attainment of the retention temperature in the heating stage is more than 60°C/h, or when the retention time at a retention temperature of 450 to 560°C in the retention stage is less than 0.5 hour, the amount of generated nuclei is insufficient, and it is impossible to obtain the amounts of solid solution Si and solid solution Mn, set in the present disclosure. When the time for which the hot-rolled sheet has a temperature of 400°C or more is less than 5 minutes in the rolling stage, the amounts of precipitated Al-Mn-based and Al-Mn-Si-based intermetallic compounds are insufficient, and it is impossible to obtain the amounts of solid solution Si and solid solution Mn, set in the present disclosure. When the retention temperature in the retention stage is more than 560°C, the nuclei of the generated intermetallic compounds further dissolved, and it is impossible to obtain the amounts of solid solution Si and solid solution Mn, set in the present disclosure. In addition, a retention temperature of more than 560°C may cause the aluminum alloy to be melted, thereby preventing a fin material from being produced. A retention temperature of less than 450°C in the retention stage may result in insufficient plastic workability in the hot rolling, thereby causing cracking in the hot rolling and preventing an aluminum alloy material from being produced.

The heating rate from the attainment of 400°C to the attainment of the retention temperature in the heating stage is preferably 50°C/h or less, the retention time in the retention stage is preferably 1.0 hour or more, the retention temperature in the retention stage is preferably 460 to 540°C, and the time for which the hot-rolled sheet has a temperature of 400°C or more in the hot-rolling stage is preferably 7 minutes or more.

The lower limit value of the heating rate from the attainment of 400°C to the attainment of the retention temperature in the retention stage is not particularly limited from the viewpoint of the amounts of solid solution Si and solid solution Mn, set in the present disclosure, but when the lower limit value is set at less than 10°C/h, a very long time is needed for rising a temperature, and economic efficiency is considerably deteriorated. The upper limit value of the retention time in the retention stage is not particularly limited from the viewpoint of the amounts of solid solution Si and solid solution Mn, set in the present disclosure, but when the upper limit value is more than 20 hours, economic efficiency is considerably deteriorated. In addition, the upper limit value of the time for which the hot-rolled sheet has a temperature of 400°C or more in the hot-rolling stage is not particularly limited, but when the upper limit value is more than 50 minutes, economic efficiency is considerably deteriorated.

### 6-1-3. Cold-Rolling Step

The method of producing the aluminum alloy fin material according to the present disclosure in Embodiment 1 is further characterized by the cold-rolling step. In the cold-rolling step, the temperature of the cold-rolled sheet is set at 120°C or less. Such control can result in a decrease in recrystallization temperature during brazing, whereby a recrystallization temperature in a temperature rise process during brazing heating can be set at 450°C or less, grain boundary segregation is consequently eliminated before melting of a brazing-filler during the brazing, each of the values of S1/S2 and Z1/Z2 further consequently becomes 1.20 or less, and melting of a fin can be suppressed. The reasons thereof will be described below.

As already mentioned, recrystallization occurs in an aluminum alloy fin material during brazing. Processing strain applied to the aluminum alloy during cold rolling is driving force for the recrystallization. However, since heat is also generated due to processing during the cold rolling, only the cold rolling results in an increase in the temperature of a material due to the heat generated due to the processing, thereby recovering the applied processing strain, and therefore results in insufficient processing strain. As a result of repeatedly conducting intensive research with attention to the above, the present inventors found that when the temperature of the cold-rolled sheet during the cold-rolling step is 120°C or less, sufficient processing strain can be obtained, and a recrystallization temperature during brazing time can be lowered to 450°C or less.

When the temperature of the cold-rolled sheet during the cold rolling is more than 120°C, the applied processing strain is recovered, and it is impossible to lower a recrystallization temperature during brazing to 450°C or less. The temperature of the cold-rolled sheet during the cold rolling is preferably 100°C or less. The lower limit value of the temperature of the aluminum alloy during the cold rolling is not limited from the viewpoint of processing strain, but it is difficult to set the lower limit value at 60°C or less because it is impossible to completely eliminate heat generated due to processing. A method of controlling the temperature of the aluminum alloy during the cold rolling is not particularly limited, but the temperature can be controlled by, for example, a method in which a temperature in a cold-rolling output side is measured and fed back into a cold-rolling rate.

When one or more annealing steps are performed in the cold rolling, the above-described temperature control may be performed in final cold rolling after final annealing.

### 6-1-4. Other Steps

The step of casting the aluminum alloy fin material according to the present disclosure in Embodiment 1 is performed by a semi-continuous casting (DC) method. In the aluminum alloy fin material according to the present disclosure, melting of a fin and rupture of the fin due to high-temperature fatigue are suppressed by the heating stage, the retention stage, and the hot-rolling stage in the hot-rolling step, as already mentioned. Examples of the method of casting the aluminum alloy include a continuous casting method as well as the semi-continuous casting method. However, an aluminum alloy obtained by the continuous casting method has a small sheet thickness, is incapable of being subjected to the hot-rolling step, and is therefore incapable of being applied to the present disclosure.

The ingot obtained by casting the aluminum alloy may be subjected to the homogenization treatment step before the hot-rolling step. Typically, the homogenization treatment step is preferably performed at 450 to 620°C for 1 to 24 hours, and more preferably performed at 480 to 620°C for 1 to 20 hours. A treatment temperature of less than 450°C or a treatment time of less than 1 hour may result in an insufficient homogenization effect, while a treatment temperature of more than 620°C may cause the ingot to be melted. A treatment time of more than 24 hours causes economic efficiency to be considerably deteriorated. Control equivalent to the already-mentioned control set in the heating stage in the hot-rolling step can be performed in the heating stage in the homogenization treatment step. However, when the aluminum alloy is temporarily cooled after the homogenization treatment, the nucleus of a generated intermetallic compound disappears, and therefore, it is impossible to obtain an effect equivalent to the effect of treatment in the heating stage in the hot-rolling step.

The annealing step is performed one or more times in or after the cold-rolling step, or in and after the cold-rolling step for the purpose of improvement of formability, and the like. Specifically, (1) intermediate annealing is performed one or more times in the cold-rolling step, (2) a final annealing step is performed once after the cold-rolling step, or (3) (1) and (2) are performed. In the annealing step, a fin material is preferably retained at 200 to 450°C for 1 to 10 hours. A retention temperature of less than 200°C and a retention time of less than 1 hour may cause the above-described effects to be insufficient. A retention temperature of more than 450°C and a retention time of more than 10 hours cause economic efficiency to be considerably deteriorated. More preferred annealing conditions are a temperature of 230 to 420°C and a retention time of 1 to 8 hours. The upper limit of the number of such annealing steps is not particularly limited, but the upper limit is preferably set at three in order to avoid an increase in cost due to the increased number of steps. When the annealing is performed in the cold rolling, a cold rolling reduction between the final annealing and the attainment of a final sheet thickness is preferably set at 15% or more from the viewpoint of the already-mentioned processing strain.

### 6-2. Production Method in Embodiment 2

The method of producing the aluminum alloy fin material according to the present disclosure in Embodiment 2 will now be described.

### 6-2-1. Each Production Step

The method of producing the aluminum alloy fin material according to the present disclosure in Embodiment 2 includes a step of casting an aluminum alloy, a homogenization treatment step of homogenization-treating a cast ingot, a hot-rolling step of hot-rolling a homogenization-treated ingot, a cold-rolling step of cold-rolling a hot-rolled sheet, and one or more annealing steps of annealing a cold-rolled sheet in or after the cold-rolling step, or in and after the cold-rolling step.

In the aluminum alloy fin material of the present disclosure, excellent resistance to melting of a fin and high-temperature durability are achieved by controlling the amounts of solid solution Si and solid solution Mn, and a recrystallization temperature during brazing. As a result of intensive research, the present inventors found that in a production step, the homogenization treatment step most greatly influences the amounts of solid solution Si and solid solution Mn, and the cold-rolling step most greatly influences a recrystallization temperature during brazing. Methods of controlling the homogenization treatment step and the cold-rolling step will be described below.

### 6-2-2. Homogenization Treatment Step

The method of producing the aluminum alloy fin material according to the present disclosure in Embodiment 2 is characterized primarily by the homogenization treatment step of homogenization-treating a cast aluminum alloy ingot. The homogenization treatment step includes a heating stage of heating an ingot, a retention stage subsequent to the heating stage, and a cooling stage of cooling the heated and retained ingot. In the heating stage, a heating rate from attainment of 400°C to attainment of a retention temperature in the retention stage is set at 60°C/h or less. In the retention stage, the retention temperature is set at 450 to 560°C, and a retention time is set at 1.0 hour or more. Further, in the cooling stage, a cooling rate before the ingot attains a temperature of 400°C is set at 60°C/h or less. The setting of the conditions of the step of homogenization-treating an aluminum alloy in such a manner enables the aluminum alloy fin material according to the present disclosure to achieve the amount of solid solution Si before brazing, set in the present disclosure, and the amounts of solid solution Mn before and after the brazing, set in the present disclosure (hereinafter referred to as "amounts of solid solution Si and solid solution Mn set in the present disclosure") and to exhibit excellent resistance to melting of a fin and excellent high-temperature durability during the brazing. The reasons thereof will be described below.

In the step of casting an aluminum alloy, large amounts of Si and Mn form solid solution in the matrix of the ingot. Such large amounts of Si and Mn forming solid solution in the matrix in such a manner generate Al-Mn-based and Al-Mn-Si-based intermetallic compounds in the heating stage, the retention stage, and the cooling stage in the homogenization treatment step, and the conditions of the homogenization treatment step including the three stages almost determine the amounts of solid solution Si and solid solution Mn, set in the present disclosure, in the aluminum alloy fin material before brazing.

Therefore, in order to reduce the amounts of solid solution Si and solid solution Mn, maximum amounts of Al-Mn-based and Al-Mn-Si-based intermetallic compounds may be precipitated in the heating stage, the retention stage, and the cooling stage. In particular, because a precipitation amount in a temperature range of 400°C or more is large, subsequent temperature control is important. Al-Mn-based and Al-Mn-Si-based intermetallic compounds can be sufficiently precipitated, and the amounts of solid solution Si and solid solution Mn, set in the present disclosure, can be obtained, by setting, at 60°C/h or less, a heating rate from attainment of 400°C to attainment of a retention temperature in the heating stage, setting, at 1.0 hour or more, a retention time at a retention temperature of 450 to 560°C in the retention stage, and setting, at 60°C/h or less, a cooling rate before the ingot attains a temperature of 400°C in the cooling stage.

When the heating rate from the attainment of 400°C to the attainment of the retention temperature in the heating stage is more than 60°C/h, when in the retention stage, the retention temperature is less than 450°C or the retention time is less than 1.0 hour, or when the cooling rate before the ingot attains a temperature of 400°C in the cooling stage is more than 60°C/h, the amount of precipitated intermetallic compound is insufficient, and it is impossible to obtain the amounts of solid solution Si and solid solution Mn, set in the present disclosure. When the retention temperature in the retention stage is more than 560°C, Si and Mn in the precipitated intermetallic compounds further dissolved, and it is impossible to obtain the amounts of solid solution Si and solid solution Mn, set in the present disclosure. In addition, a retention temperature of more than 560°C may cause the aluminum alloy to be melted, thereby preventing a fin material from being produced.

The heating rate from the attainment of 400°C to the attainment of the retention temperature in the heating stage is preferably 50°C/h or less, the retention time in the retention stage is preferably 2.0 hours or more, the retention temperature in the retention stage is preferably 480 to 530°C, and the cooling rate before the ingot attains a temperature of 400°C in the cooling stage is preferably 50°C/h or less.

The lower limit values of the heating rate from the attainment of 400°C in the heating stage to the attainment of the retention temperature in the retention stage and the cooling rate before the ingot attains a temperature of 400°C in the cooling stage are not particularly limited from the viewpoint of the amounts of solid solution Si and solid solution Mn, set in the present disclosure, but when the lower limit values are set at less than 10°C/h, very long times are needed for increasing and decreasing temperatures, and economic efficiency is considerably deteriorated. The upper limit value of the retention time in the retention stage is not particularly limited from the viewpoint of the amounts of solid solution Si and solid solution Mn, defined in the present disclosure, but when the retention time is more than 20 hours, economic efficiency is considerably deteriorated.

### 6-2-3. Cold-Rolling Step

The method of producing the aluminum alloy fin material according to the present disclosure in Embodiment 2 is further characterized by the cold-rolling step. In the cold-rolling step, the temperature of the cold-rolled sheet is set at 120°C or less. Such control can result in a decrease in recrystallization temperature during brazing, whereby a recrystallization temperature in a temperature rise process during brazing heating can be set at 450°C or less, grain boundary segregation is consequently eliminated before melting of a brazing-filler during the brazing, each of the values of S1/S2 and Z1/Z2 further consequently becomes 1.20 or less, and melting of a fin can be suppressed. The reasons thereof will be described below.

As already mentioned, recrystallization occurs in an aluminum alloy fin material during brazing. Processing strain applied to the aluminum alloy during cold rolling is driving force for the recrystallization. However, since heat is also generated due to processing during the cold rolling, only the cold rolling results in an increase in the temperature of a material due to the heat generated due to the processing, thereby recovering the applied processing strain, and therefore results in insufficient processing strain. As a result of repeatedly conducting intensive research with attention to the above, the present inventors found that when the temperature of the cold-rolled sheet during the cold-rolling step is 120°C or less, sufficient processing strain can be obtained, and a recrystallization temperature during brazing time can be lowered to 450°C or less.

When the temperature of the cold-rolled sheet during the cold rolling is more than 120°C, the applied processing strain is recovered, and it is impossible to lower a recrystallization temperature during brazing to 450°C or less. The temperature of the cold-rolled sheet during the cold rolling is preferably 100°C or less. The lower limit value of the temperature of the aluminum alloy during the cold rolling is not limited from the viewpoint of processing strain, but it is difficult to set the lower limit value at 60°C or less because it is impossible to completely eliminate heat generated due to processing. A method of controlling the temperature of the aluminum alloy during the cold rolling is not particularly limited, but the temperature can be controlled by, for example, a method in which a temperature in a cold-rolling output side is measured and fed back to a cold-rolling rate.

When one or more annealing steps are performed in the cold rolling, the above-described temperature control may be performed in final cold rolling after final annealing.

### 6-2-4. Other Steps

The step of casting the aluminum alloy fin material according to the present disclosure in Embodiment 2 is performed by a semi-continuous casting (DC) method. In the aluminum alloy fin material according to the present disclosure, melting of a fin and rupture of the fin due to high-temperature fatigue are suppressed by the heating stage, the retention stage, and the cooling stage in the homogenization treatment step, as already mentioned. Examples of the method of casting the aluminum alloy include a continuous casting method as well as the semi-continuous casting method. However, an aluminum alloy obtained by the continuous casting method has a small sheet thickness, is incapable of being subjected to the hot-rolling step, and is therefore incapable of being applied to the present disclosure.

After the casting step, the ingot of the aluminum alloy subjected to the homogenization treatment step is then subjected to the hot-rolling step. In the heating stage in the hot-rolling step, the ingot is preferably heated at 400 to 580°C for 0.5 hour or more, and more preferably at 420 to 550°C for 1 hour or more. A heating temperature of less than 400°C may result in low plastic workability and in cracking in the hot rolling, a heating temperature of more than 580°C may cause the ingot to be melted, a heating time of less than 0.5 hour may result in the nonuniform temperature of the ingot. The upper limit value of the heating time is not particularly limited, but is around 20 hours in the present disclosure from the viewpoint of economic efficiency.

The annealing step is performed one or more times in or after the cold-rolling step, or in and after the cold-rolling step for the purpose of improvement of formability, and the like. Specifically, (1) intermediate annealing is performed one or more times in the cold-rolling step, (2) a final annealing step is performed once after the cold-rolling step, or (3) (1) and (2) are performed. In the annealing step, a fin material is preferably retained at 200 to 450°C for 1 to 10 hours. A retention temperature of less than 200°C and a retention time of less than 1 hour may cause the above-described effects to be insufficient. A retention temperature of more than 450°C and a retention time of more than 10 hours cause economic efficiency to be considerably deteriorated. More preferred annealing conditions are a temperature of 230 to 420°C and a retention time of 1 to 8 hours. The upper limit of the number of such annealing steps is not particularly limited, but the upper limit is preferably set at three in order to avoid an increase in cost due to the increased number of steps. When the annealing is performed in the cold rolling, a cold rolling reduction between the final annealing and the attainment of a final sheet thickness is preferably set at 15% or more from the viewpoint of the already-mentioned processing strain.

The sheet thickness of the aluminum alloy fin material according to the present disclosure is not particularly limited, but the aluminum alloy fin material sufficiently exhibits superiority in improvement in resistance to melting and improvement in high-temperature durability when being a thin-thickness material having a sheet thickness of 100 µm or less. A sheet thickness of more than 100 µm does not cause the melting and high-temperature durability of a fin to be very problematic, and therefore results in the insufficient exhibition of the superiority of the present disclosure.

### 7. Heat Exchanger

The aluminum alloy fin material according to the present disclosure is preferably used as a fin for a heat exchanger. A heat exchanger can be obtained by, for example, corrugating the aluminum alloy fin material in a fin shape, then combining the aluminum alloy fin material with a member for a heat exchange, such as a flow passage formation component or a header plate, and subjecting the aluminum alloy fin material to brazing heating.

The heat exchanger is assembled by arranging the fin materials on the outer surface of a flow passage formation component of which both end portions are attached to header plates. Then, both the overlapped end portions of the flow passage formation component, the fin material and the outer surface of the flow passage formation component, and both ends of the flow passage formation component and the header plates are simultaneously joined to each other by one-time brazing heating. As a brazing method, a fluxless brazing method, a Nocolok brazing method, or a vacuum brazing method is used, and the Nocolok brazing method is preferred. In such brazing, a recrystallization temperature in a temperature rise process during brazing is set at 450°C or less in order to prevent a fin from being melted during the brazing, as described above. The other brazing heating conditions are preferably the same as described above.

### Examples

The present disclosure will now be described in more detail with reference to present disclosure examples and comparative examples. However, the present disclosure is not restricted thereto.

### Example 1 (Present Disclosure Examples 1-1 to 1-9, and 1-19 to 1-28, and Comparative Examples 1-10 to 1-18, and 1-29 to 1-34)

The aluminum alloy fin material produced by the production method of Embodiment 1 will now be described.

Each of aluminum alloys with alloy compositions shown in Table 1 was cast by DC casting, and both surfaces of each of the aluminum alloys were faced and finished. All the thicknesses of the ingots obtained by the facing were set at 400 mm. Each of the ingots of the aluminum alloys was subjected to a homogenization treatment step, a hot-rolling step, a cold-rolling step, and an annealing step under conditions shown in Table 2. All the sheet thicknesses after the hot rolling were 3 mm. Then, a fin material sample having a final sheet thickness of 0.05 mm was produced in any one of (1) order of cold rolling → intermediate annealing → final cold rolling, (2) order of cold rolling → intermediate annealing → final cold rolling → final annealing, and (3) order of cold rolling → final annealing. All the conditions of the intermediate annealing and the final annealing were set at 370°C and 2 hours, and all the rolling reductions in the final cold rolling after the intermediate annealing was set at 30%. The combinations of the steps are shown in Table 2.

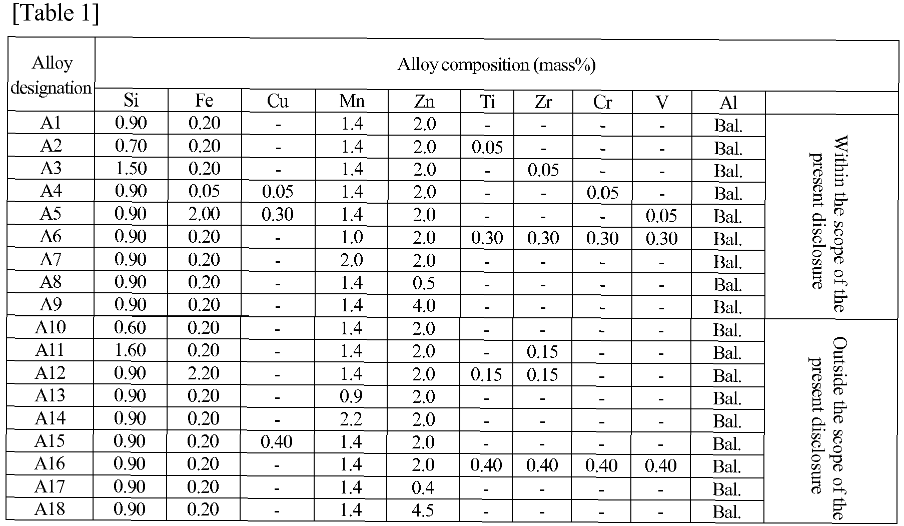

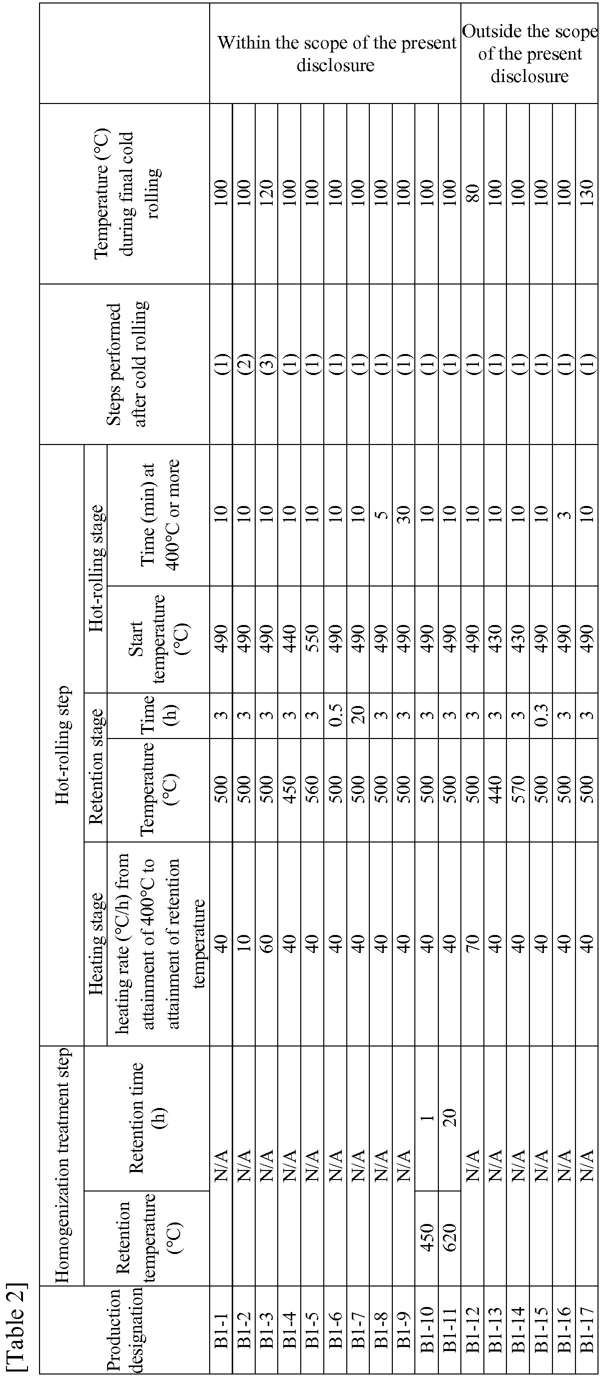

In Table 3, productability is shown as "good" in a case in which no problem occurred in the above production steps, and rolling was able to be performed up to a final sheet thickness of 0.05 mm, while productability is shown as "poor" in a case in which cracking occurred during casting or rolling, and rolling was not able to be performed up to a final sheet thickness of 0.05 mm, or in a case in which melting occurred in the homogenization treatment step, and a fin material was not able to be produced.

The above-described fin material samples were subjected to each of the following evaluations. The conditions of brazing heating (brazing heating relevant conditions) in the evaluations are shown in Table 4, and the evaluation results are shown in Table 3. The samples with productability "poor" in Table 3 were not able to be produced, and therefore, were not able to be subjected to the following evaluations.

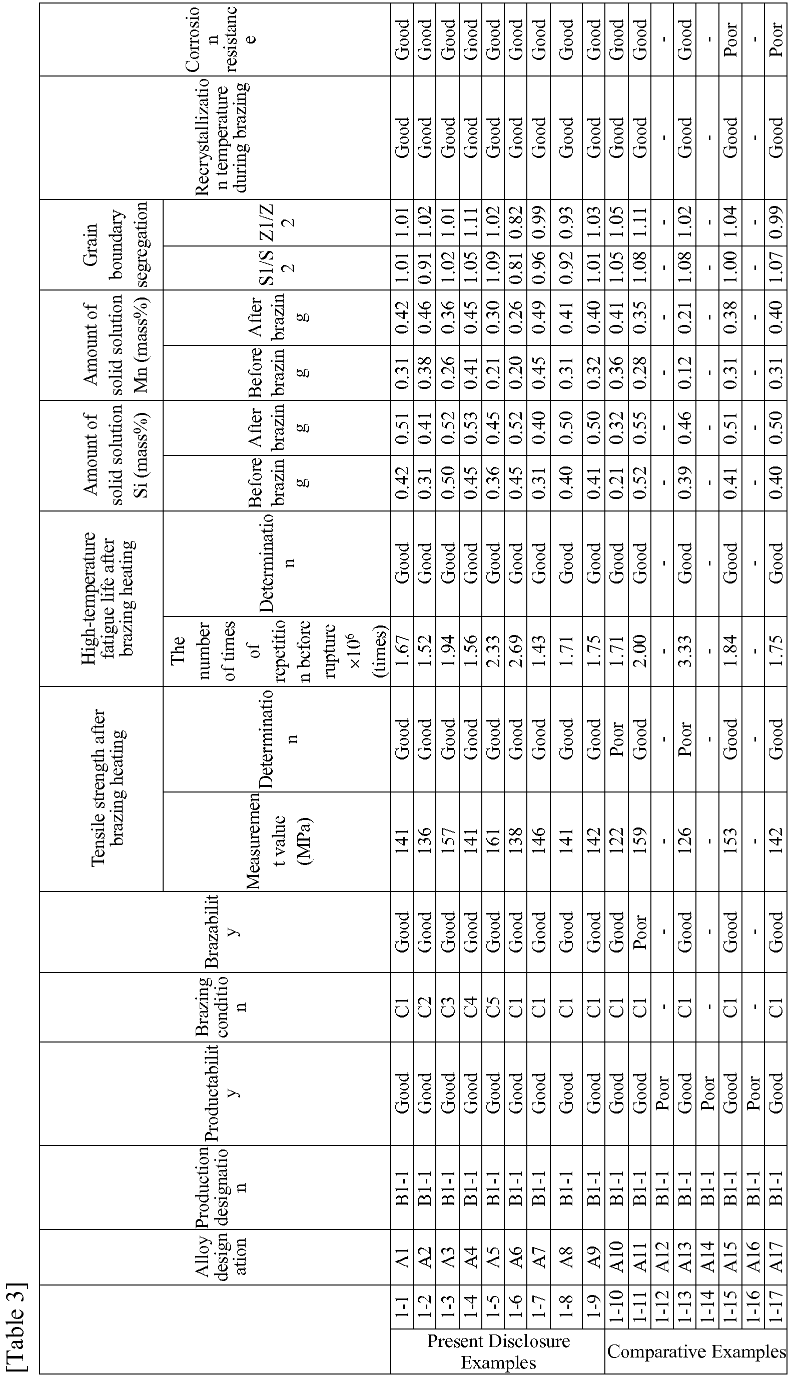

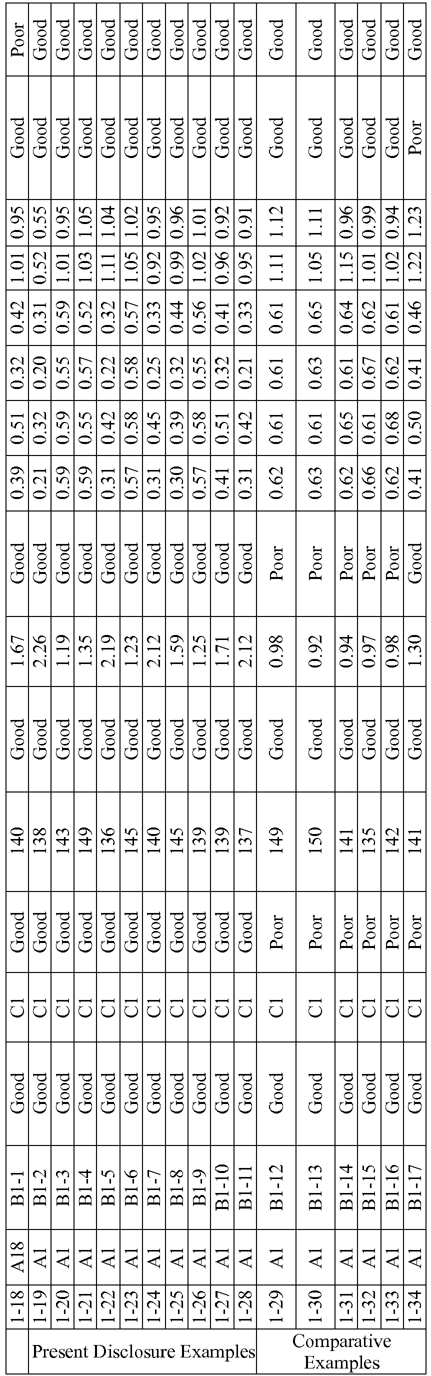

**[Table 4]**

| | heating rate at 300 to 580°C (°C/min) | Attainment temperature (°C) |
|---|---|---|
| C1 | 120 | 600 |
| C2 | 60 | 600 |
| C3 | 160 | 600 |
| C4 | 120 | 585 |
| C5 | 120 | 620 |

### (Evaluation of Brazability)

Each fin material sample was corrugated to form a heat exchanger fin. The fin was combined with a brazing filler material surface of a material equivalent to a tube, which was obtained by cladding an A3003 alloy core material with 10% of A4045 alloy and had a sheet thickness of 0.3 mm, and dipped in 5% of fluoride flux suspension with water, subjected to brazing heating under any of the conditions of Table 4, to produce a mini-core sample. The brazability of such a mini-core sample in which a fin was not melted was evaluated as acceptable (good), while the brazability of such a mini-core sample in which a fin was melted was evaluated as unacceptable (poor).

### (Measurement of Tensile Strength after Brazing Heating)

A sample solely of fin material was subjected to brazing relevant heating under any of the conditions of Table 4, and was subjected to a tensile test according to JIS Z2241 under conditions of a tension speed of 10 mm/min and a gauge length of 50 mm. Tensile strength was read from an obtained stress-strain curve. As a result, the case of a tensile strength of 130 MPa or more was evaluated as acceptable (good), while the case of a tensile strength of less than 130 MPa was evaluated as unacceptable (poor).

### (Measurement of High-Temperature Fatigue Life after Brazing Heating)

A sample solely of fin material was subjected to brazing relevant heating under any of the conditions of Table 4, and was subjected to a fatigue test according to JIS Z2273 in a constant-temperature bath having a temperature of 100°C. A stress ratio was set at 0.1, a maximum stress was set at 100 MPa, and a frequency was set at 20 Hz. A case in which the number of times of repetition before rupture was 10⁶ or more was evaluated as acceptable (good), while a case in which the number of times of repetition before rupture was less than 10⁶ was evaluated as unacceptable (poor).

### (Measurement of Amount of Solid Solution Si and Amount of Solid Solution Mn)

A sample solely of fin material was subjected to brazing relevant heating under any of the conditions of Table 4. The sample subjected to the brazing relevant heating and a sample subjected to no brazing relevant heating were used as test samples, and were dissolved in phenol solutions, and the samples, from which undissolved intermetallic compounds were removed by filtration, were subjected to emission spectrometry, thereby performing measurement. A value was determined as the amount of solid solution of each of Si and Mn by subtracting the amount of each of Si and Mn existing as an intermetallic compound from the content of each of Si and Mn.

### (Determination of Recrystallization Temperature during Brazing Heating)

A sample solely of fin material was heated under any of the conditions of Table 4, taken out when the fin material sample had 450°C in temperature rise, and subjected to a tensile test according to JIS Z2241 under conditions of a tension speed of 10 mm/min and a gauge length of 50 mm. A 0.2% proof stress was read from an obtained stress-strain curve, and a case in which the value of the 0.2% proof stress was 80 MPa or less resulted in a determination that recrystallization had been completed, and was evaluated as acceptable (good), while a case in which the value was more than 80 MPa resulted in a determination that recrystallization had not been completed, and was evaluated as unacceptable (poor).

### (Evaluation of Grain Boundary Segregation)

A sample solely of fin material was subjected to brazing relevant heating under any of the conditions of Table 4. The sample subjected to the brazing relevant heating and a sample subjected no brazing relevant heating were used as test samples, and were sampled to have a size of 20 µm × 20 µm with FIB (focused ion beam) so that a grain boundary was included. In the sample, Si and Zn were mapped in a visual field of 0.2 µm × 0.2 µm by energy dispersive X-ray analysis (EDS) using a transmission scanning electron microscope (STEM). On the basis of the results of the mapping, the average values of the semi-quantitative values of the concentration of Si and Zn within a range of 0.05 µm on both sides of a grain boundary were determined as S1 and Z1, respectively. In addition, the average values of the semi-quantitative values of the concentrations of Si and Zn in a matrix were determined as S2 and Z2, respectively, and the values of S1/S2 and Z1/Z2 were calculated.

### (Evaluation of Corrosion Resistance by Measurement of Depth of Corrosion)

A mini-core sample similar to the mini-core sample used for evaluating the brazability was produced, and was subjected to a SWAAT test on the basis of ASTM-G85. A sample in which corrosion penetration did not occur in a material equivalent to a tube for 1000 hours was evaluated as acceptable (good), while a sample in which corrosion penetration occurred was evaluated as unacceptable (poor).

In Present Disclosure Examples 1-1 to 1-9 and 1-19 to 1-28, the conditions set in the present disclosure were satisfied, and all of productability, brazability, tensile strength after brazing heating, high-temperature fatigue life after the brazing heating, and corrosion resistance were acceptable.

In contrast, Comparative Example 1-10 resulted in unacceptable tensile strength after brazing heating because of an excessively small amount of Si composition.
Comparative Example 1-11 resulted in melting of a fin material during brazing and in unacceptable brazability because of an excessively large amount of Si composition.
Comparative Example 1-12 resulted in cracking in rolling, in impossible production of a fin material, and in unacceptable productability because of an excessively large amount of Fe composition.
Comparative Example 1-13 resulted in unacceptable tensile strength after brazing heating because of an excessively small amount of Mn composition.
Comparative Example 1-14 resulted in cracking in rolling, in impossible production of a fin material, and in unacceptable productability because of an excessively large amount of Mn composition.
Comparative Example 1-15 resulted in unacceptable corrosion resistance because of an excessively large amount of Cu composition.
Comparative Example 1-16 resulted in cracking in rolling, in impossible production of a fin material, and in unacceptable productability because of excessively large amounts of Ti, Zr, Cr, and V compositions.
Comparative Example 1-17 resulted in unacceptable corrosion resistance because of an excessively small amount of Zn composition.
Comparative Example 1-18 resulted in unacceptable corrosion resistance because of an excessively large amount of Zn composition.
Comparative Example 1-29 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively high heating rate from attainment of 400°C to attainment of a retention temperature in a heating stage in a hot-rolling step.
Comparative Example 1-30 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively low retention temperature in a retention stage in a hot-rolling step.
Comparative Example 1-31 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively high retention temperature in a retention stage in a hot-rolling step.
Comparative Example 1-32 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively short retention time in a retention stage in a hot-rolling step.
Comparative Example 1-33 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively short time for which a temperature of 400°C or more was achieved in a hot-rolling stage in a hot-rolling step.
Comparative Example 1-34 resulted in a recrystallization temperature of more than 450°C during brazing, thereby failing to eliminate grain boundary segregation of Si and Zn occurring during the brazing, resulting in the excessively high values of S1/S2 and Z1/Z2, causing melting of the grain boundary of a fin material during the brazing, and resulting in unacceptable brazability, because of the excessively high temperature of a cold-rolled sheet in a cold-rolling step.

### Example 2 (Present Disclosure Examples 2-1 to 2-9, and 2-19 to 2-26, and Comparative Examples 2-10 to 2-18, and 2-27 to 2-32)

The aluminum alloy fin material produced by the production method of Embodiment 2 will now be described.

Each of aluminum alloys with alloy compositions shown in Table 1 as described above was cast by DC casting, and both surfaces of each of the aluminum alloys were faced and finished. All the thicknesses of the ingots obtained by the facing were set at 400 mm. Each of the ingots of the aluminum alloys was subjected to a homogenization treatment step, a hot-rolling step, a cold-rolling step, and an annealing step under conditions shown in Table 5. The homogenization-treated ingot was heated at 480°C for 3 hours in a heating stage in the hot-rolling step, and then subjected to a hot-rolling stage to obtain a hot-rolled sheet having a sheet thickness of 3 mm. Then, a fin material sample having a final sheet thickness of 0.05 mm was produced in any one of (1) order of cold rolling → intermediate annealing → final cold rolling, (2) order of cold rolling → intermediate annealing → final cold rolling → final annealing, and (3) order of cold rolling → final annealing. All the conditions of the intermediate annealing and the final annealing were set at 370°C and 2 hours, and all the rolling reductions in the final cold rolling after the intermediate annealing was set at 30%. The combinations of the steps are shown in Table 5.

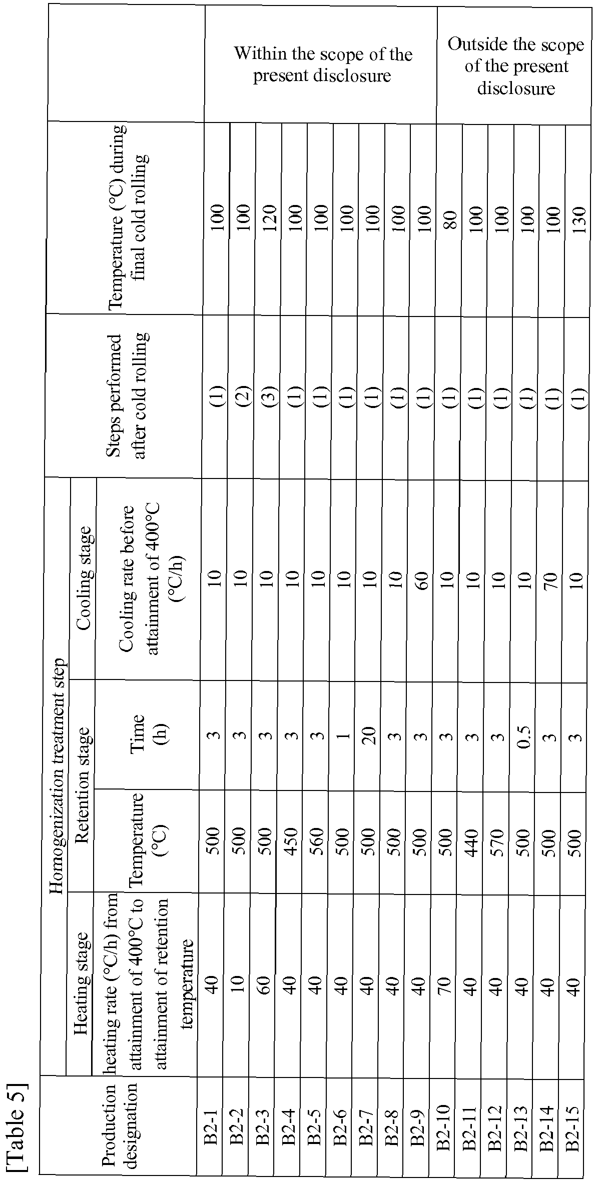

In Table 6, productability is shown as "good" in a case in which no problem occurred in the above production steps, and rolling was able to be performed up to a final sheet thickness of 0.05 mm, while productability is shown as "poor" in a case in which cracking occurred during casting or rolling, and rolling was not able to be performed up to a final sheet thickness of 0.05 mm, or in a case in which melting occurred in the homogenization treatment step, and a fin material was not able to be produced.

The above-described fin material samples were subjected to each of the following evaluations. The conditions of brazing heating (brazing heating relevant conditions) in the evaluations are shown in Table 4 as described above, and the evaluation results are shown in Table 6. The samples with productability "poor" in Table 6 were not able to be produced, and therefore, were not able to be subjected to the following evaluations.

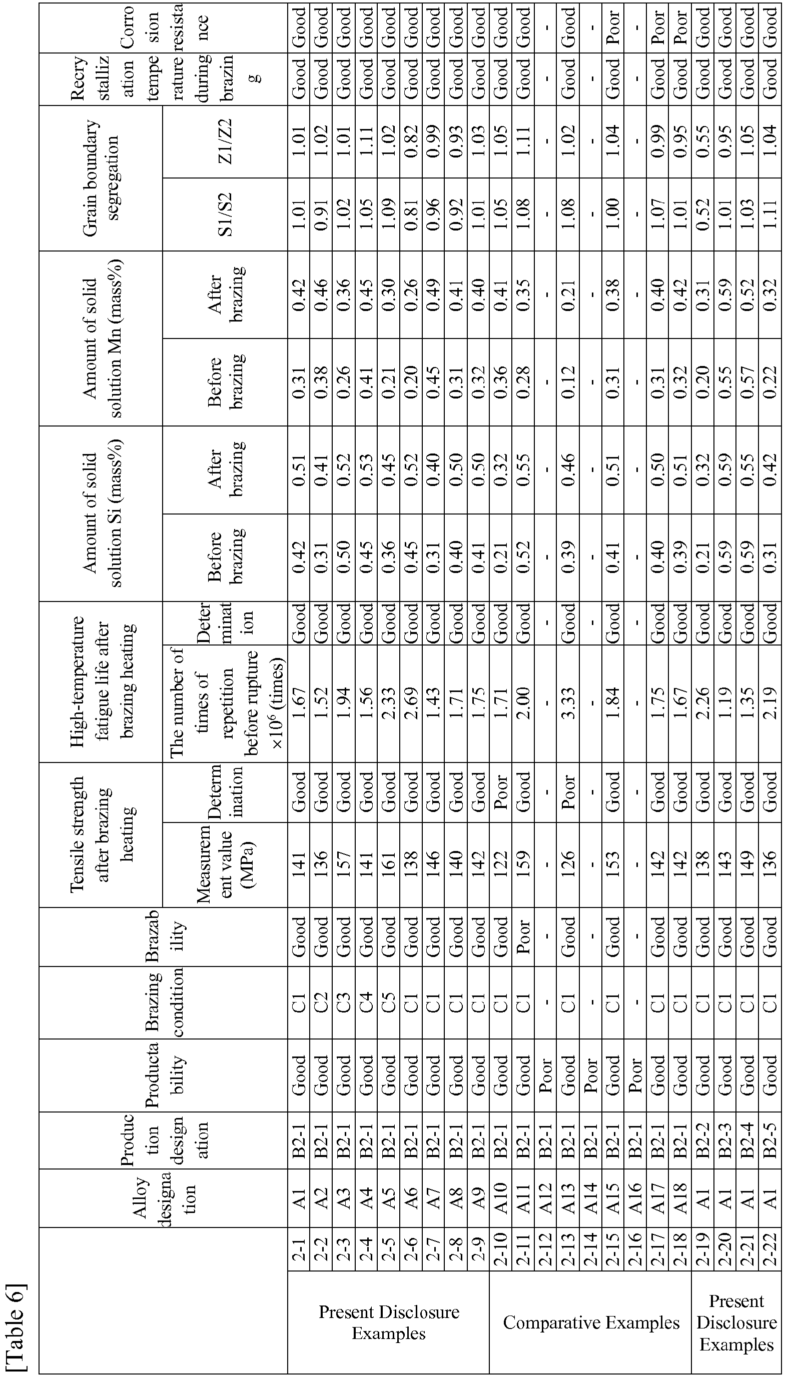

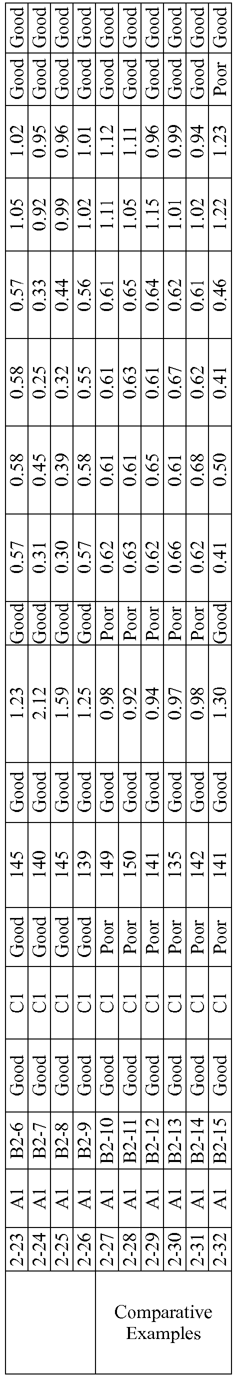

Evaluation of brazability, measurement of tensile strength after brazing heating, measurement of high-temperature fatigue life after the brazing heating, measurement of the amount of solid solution Si and the amount of solid solution Mn, determination of a recrystallization temperature during the brazing heating, evaluation of grain boundary segregation, and evaluation of corrosion resistance by measurement of the depth of corrosion were performed in the same manners as the manners of Example 1.

In Present Disclosure Examples 2-1 to 2-9, and 2-19 to 2-26, the conditions set in the present disclosure were satisfied, and all of productability, brazability, tensile strength after brazing heating, high-temperature fatigue life after the brazing heating, and corrosion resistance were acceptable.

In contrast, Comparative Example 2-10 resulted in unacceptable tensile strength after brazing heating because of an excessively small amount of Si composition.
Comparative Example 2-11 resulted in melting of a fin material during brazing and in unacceptable brazability because of an excessively large amount of Si composition.
Comparative Example 2-12 resulted in cracking in rolling, in impossible production of a fin material, and in unacceptable productability because of an excessively large amount of Fe composition.
Comparative Example 2-13 resulted in unacceptable tensile strength after brazing heating because of an excessively small amount of Mn composition.
Comparative Example 2-14 resulted in cracking in rolling, in impossible production of a fin material, and in unacceptable productability because of an excessively large amount of Mn composition.
Comparative Example 2-15 resulted in unacceptable corrosion resistance because of an excessively large amount of Cu composition.
Comparative Example 2-16 resulted in cracking in rolling, in impossible production of a fin material, and in unacceptable productability because of excessively large amounts of Ti, Zr, Cr, and V compositions.
Comparative Example 2-17 resulted in unacceptable corrosion resistance because of an excessively small amount of Zn composition.
Comparative Example 2-18 resulted in unacceptable corrosion resistance because of an excessively large amount of Zn composition.
Comparative Example 2-27 resulted in an excessively large amount of solid solution Si before and after brazing, and an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively high heating rate from attainment of 400°C to attainment of a retention temperature in a heating stage in a homogenization treatment step.
Comparative Example 2-28 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively low retention temperature in a retention stage in a homogenization treatment step.
Comparative Example 2-29 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively high retention temperature in a retention stage in a homogenization treatment step.
Comparative Example 2-30 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively short retention time in a retention stage in a homogenization treatment step.
Comparative Example 2-31 resulted in an excessively large amount of solid solution Si before and after brazing, thereby causing melting of the grain boundary of a fin material during the brazing and resulting in unacceptable brazability, and resulted in an excessively large amount of Mn before and after the brazing, thereby also resulting in unacceptable high-temperature fatigue life, because of an excessively high cooling rate before the temperature of an ingot attained 400°C in a cooling stage, in a hot-rolling stage in a homogenization treatment step.
Comparative Example 2-32 resulted in a recrystallization temperature of more than 450°C during brazing, thereby failing to eliminate grain boundary segregation of Si and Zn occurring during the brazing, resulting in the excessively high values of S1/S2 and Z1/Z2, causing melting of the grain boundary of a fin material during the brazing, and resulting in unacceptable brazability, because of the excessively high temperature of a cold-rolled sheet in a cold-rolling step.

### Industrial Applicability

The aluminum alloy fin material according to the present disclosure is preferably used particularly as a fin material for an automotive heat exchanger because of being excellent in strength, corrosion resistance, and brazability such as a joining rate and resistance to melting in brazing.

## Claims

1. An aluminum alloy fin material for a heat exchanger, the aluminum alloy fin material comprising an aluminum alloy comprising 0.70 to 1.50 mass% Si, 0.05 to 2.00 mass% Fe, 1.0 to 2.0 mass% Mn, 0.5 to 4.0 mass% Zn, with a balance consisting of Al and inevitable impurities, wherein before brazing heating, an amount of solid solution Si is 0.60 mass% or less, and an amount of solid solution Mn is 0.60 mass% or less, and wherein a recrystallization temperature in a temperature rise process during the brazing heating is 450°C or less.

2. The aluminum alloy fin material for a heat exchanger according to claim 1, wherein in the aluminum alloy after brazing heating, an amount of solid solution Mn is 0.60 mass% or less, and each of values of S1/S2 and Z1/Z2 is 1.20 or less when concentrations of Si and Zn in a vicinity of a grain boundary are assumed to be S1 mass% and Z1 mass%, respectively, and concentrations of Si and Zn in a matrix are assumed to be S2 mass% and Z2 mass%, respectively.

3. The aluminum alloy fin material for a heat exchanger according to claim 1 or 2, wherein the aluminum alloy further comprises one or more selected from 0.05 to 0.30 mass% Cu, 0.05 to 0.30 mass% Ti, 0.05 to 0.30 mass% Zr, 0.05 to 0.30 mass% Cr, and 0.05 to 0.30 mass% V.

4. A method of producing the aluminum alloy fin material for a heat exchanger according to any one of claims 1 to 3, the method comprising a step of casting the aluminum alloy, a hot-rolling step of hot-rolling a cast ingot, a cold-rolling step of cold-rolling a hot-rolled sheet, and one or more annealing steps of annealing a cold-rolled sheet in or after the cold-rolling step, or in and after the cold-rolling step, wherein the hot-rolling step comprises a heating stage, a retention stage, and a hot-rolling stage, wherein in the heating stage, a heating rate from attainment of 400°C to attainment of a retention temperature in the retention stage is 60°C/h or less, wherein in the retention stage, the retention temperature is 450 to 560°C, and a retention time is 0.5 hour or more, wherein in the hot-rolling stage, a time for which the hot-rolled sheet has a temperature of 400°C or more is 5 minutes or more, and wherein in the cold-rolling step, the cold-rolled sheet has a temperature of 120°C or less.

5. A method of producing the aluminum alloy fin material for a heat exchanger according to any one of claims 1 to 3, the method comprising a step of casting the aluminum alloy, a homogenization treatment step of homogenization-treating a cast ingot, a hot-rolling step of hot-rolling a homogenization-treated ingot, a cold-rolling step of cold-rolling a hot-rolled sheet, and one or more annealing steps of annealing a cold-rolled sheet in or after the cold-rolling step, or in and after the cold-rolling step, wherein the homogenization treatment step comprises a heating stage, a retention stage, and a cooling stage, wherein in the heating stage, a heating rate from attainment of 400°C to attainment of a retention temperature in the retention stage is 60°C/h or less, wherein in the retention stage, the retention temperature is 450 to 560°C, and a retention time is 1.0 hour or more, wherein in the cooling stage, a cooling rate before the ingot attains a temperature of 400°C is 60°C/h or less, and wherein in the cold-rolling step, the cold-rolled sheet has a temperature of 120°C or less.

6. A heat exchanger to which the aluminum alloy fin material according to any one of claims 1 to 3 is assembled by brazing.

7. A method of producing the heat exchanger according to claim 6, the method comprising subjecting a combination of the aluminum alloy fin material according to any one of claims 1 to 3 with another member to brazing heating at an attainment temperature of 590 to 615°C for 2 to 6 minutes, wherein a recrystallization temperature in a temperature rise process during brazing is set at 450°C or less, and a heating rate in a temperature range of 300 to 580°C is set at 60 to 160°C/min.
